# EUROPEAN PATENT SPECIFICATION

(11) **EP 4 158 179 B1**
(45) Date of publication and mention of the grant of the patent: **15.05.2024**
(21) Application number: 20728022.3
(22) Date of filing: 25.05.2020
(51) Int. Cl.: F02M 21/02, F16K 27/12, F16L 5/00, B60K 15/01

(54) **A GAS VALVE UNIT**
GASVENTILEINHEIT
UNITÉ DE VANNE À GAZ

(43) Date of publication of application: 05.04.2023
(73) Proprietor: Wärtsilä Finland Oy, 65100 Vaasa (FI)
(72) Inventor: WIDJESKOG, Klaus, 65100 Vaasa (FI); HÖGNABBA, Tomas, 65100 Vaasa (FI); KUUSISAARI, Marko, 65100 Vaasa (FI)
(74) Representative: Genip Oy
(86) International application number: PCT/EP2020/064386
(87) International publication number: WO 2021/239202

(56) References cited:
- WO-A1-2019/233560
- CN-A- 106 948 972
- CN-A- 111 188 703

## Description

### Technical field

The present invention relates to a gas valve unit according to 1.

### Background art

A natural gas as a fuel for internal combustion engines in marine vessels has become more common because of the environmental reasons. At the same time the equipment for handling and regulating gas fuel is subjected to stringent safety regulations. Fuel systems for feeding gaseous fuel to an internal combustion engine in a marine vessel are commonly constructed such that a fuel supply line runs inside, i.e. is enclosed by a barrier wall system, in order to prevent direct leakage to surroundings should the fuel supply line leak. It is also known to provide such a fuel system with a separate gas valve unit before each engine, into which certain components of the fuel system, like shut-off valves and pressure regulators, are assembled in centralized manner. The gas valve unit comprises an enclosure formed by a barrier wall system.

WO2008000898 A1 discloses a fuel system for gas driven piston engine in a marine vessel, which gas is stored in at least one fuel storage tank in the vessel as liquefied gas. The fuel feeding system comprises a separate fuel feed tank in which the gas is in liquid phase and at elevated pressure. The gas is also in liquid phase in the fuel storage tank, in which, however, prevails only the hydrostatic pressure caused by the liquid gas. In this kind of fuel system situations may occur in which excess gas need to purged from the tank, an often that means admission of gas into the atmosphere.

WO 2017/220106 A1 discloses a gas valve unit, which is connected to a gas introduction gas pipe and a gas consumer in a marine vessel. The gas valve unit comprises a valve member configured to operate as a closing valve for the fuel gas pipe. The gas valve unit are provided with an enclosure of collecting possible leak gas and preventing that gas to spread directly to the surrounding air.

WO2019233560 A1 discloses a gas supply system comprising a gas pipe for transporting gas, a valve arranged to the gas pipe, an enclosure for enclosing the gas pipe and the valve, and an inlet and an outlet. The gas pipe is arranged to extend inside the enclosure from the inlet of the enclosure to the outlet of the enclosure. The enclosure is of tubular form comprising a tubular first part and a tubular second part, and the first part and the second part are at least partly one inside the other and configured axially slideable in respect to each other, and at least the first part is provided with an access opening, wherein the second part is configured to cover the access opening in its first axial position and uncover the access opening in its second axial position. In the gas valve unit a gas flow control valve and its actuator are installed inside the pressure proof enclosure. In such case access to the actuator requires opening of the enclosure. Any access door of the enclosure must be sealed accordingly to endure the required pressure. This in turn means that the attachment and sealing must be very robust, and therefore the opening of the enclosure for service the instruments inside the enclosure is time consuming and laborious. Additionally the power fluid for each actuator in the gas valve unit must be led through the wall of the gas valve unit which increases the risk of failing of sealing of such lead-through.

Further gas valve units are e.g. known from CN 106 948 972 A and CN 111 188 703 A. If

An object of the invention is to provide a gas valve unit which is considerably straightforward to manufacture compared to the prior art solutions.

### Disclosure of the Invention

Objects of the invention can be met substantially as is disclosed in the independent claim and in the other claims describing more details of different embodiments of the invention.

According to an embodiment of the invention a gas valve unit comprising at least a gas pipe for transporting gas through the gas valve unit, a control valve arranged to the gas pipe, an enclosure for enclosing the gas pipe and the control valve, and having an inlet and an outlet of the gas pipe, wherein the enclosure comprises a planar base plate having a first side and a second side, and a casing comprising side walls and a bottom part, arranged at the first side of the base plate, and removably attached to the planar base plate by the side walls and the gas pipe and the control valve are supported by the base plate at the first side of the base plate, and that the planar base plate comprises an inlet lead-through for the gas pipe inlet, and an outlet lead-through for the gas pipe outlet.

This provides an effect of making the manufacturing of assembly of the gas valve unit simple and straight forward. Also, by reduced inner volume of the gas valve unit, for possibly leaked gases increases safety. Also, safety is increased by having serviceable component visible outside of the enclosure.

According to an embodiment of invention the casing comprises a flange part which encircles a casing rim, and which flange part is arranged against the base plate such as forming a space in the casing delimited by the inner wall of the casing and the base plate.

According to an embodiment of the invention the control valve is provided with an actuator for closing or opening the control valve and the actuator is coupled to the control valve by means of a mechanical force transmission system, wherein the control valve is arranged to a first side of the base plate, inside the casing, and the actuator is arranged to a second side of the base plate, and the mechanical force transmission system is configured to extend through the base plate by means of a lead-through provided with a gas tight sealing.

This way the instrumentation of the actuator which is on the second side of the base plate can be easily made without a need of lead-through of - for example - pneumatic hoses in the base plate leading to the actuator.

According to an embodiment of the invention the base plate is provided with at least one planar extension configured as an attachment bracket of the gas valve unit.

By means of the extension of the base plate the gas valve unit support to the surrounding structure can be made in advantageous manner.

According to an embodiment of the invention the inlet lead-through for the gas pipe inlet, and the outlet lead-through for the gas pipe outlet comprise an opening in the base plate which opening has an area greater than cross sectional area of the gas pipe, and the inlet lead-through for the gas pipe inlet, and the outlet lead-through for the gas pipe outlet are provided with a barrier pipe coupling arranged to the base plate at its second side, such that the area of the opening in the base plate is covered by the barrier pipe coupling.

According to an embodiment of the invention the inlet lead-through for the gas pipe inlet, and the outlet lead-through for the gas pipe outlet are arranged perpendicularly to the base plate.

According to an embodiment of the invention the gas valve unit has a first end and a second end and the inlet lead-through is arranged to the first end of the gas valve unit and the outlet lead-through is arranged at the second end of the gas valve unit.

According to an embodiment of the invention the gas valve unit comprises a filter unit arranged to the gas pipe at the first side of the base plate, and the base plate is provided with an access door at a location of the filter unit. This provides an effect of making it possible to provide access to the filter without a need of removing the casing from the base plate, which is far more laborious that simple opening of the access door.

According to an embodiment of the invention the filter unit is of cylindrical form having its axial end facing the base plate and the access door comprises a circular opening in the base plate and the diameter of the circular opening is greater than the diameter of the filter unit.

According to an embodiment of the invention the filter unit comprises a first hatch for replacing the cartridge at a first end of the filter unit for servicing the cartridge, and facing against the base plate and the access door comprises an opening in the base plate through which the hatch and the cartridge are configured to fit.

According to an embodiment of the invention the base plate is provided with two planar extensions outside the flange part of the casing at both ends of the base plate of the gas valve unit configured as an attachment bracket of the gas valve unit.

This way the gas valve unit can be supported in advantageous manner via the planar extensions of the base plate.

According to an embodiment of the invention the lead-through openings in the gas valve unit, such as lead-through for hoses, electric or data cables and mechanical force transmissions, are arranged to the base plate.

According to an embodiment of the invention each one of the valves in the gas pipe is arranged to the gas valve unit such that the valve is in the first side of the base plate and the actuator of the valve is in the second side of the base plate and a force transmission rod is provided between the actuator and the valve to extend through the base plate in gas tight manner.

The gas valve unit according to the invention is particularly, but not exclusively suitable for use in connection with toxic fuel gases, such as ammonia. That be because the unit is smaller and this way facilitates placement of the unit more freely, for example in a separate ventilated. Also, by virtue of the compact size of the gas valve unit according to the invention several units can be installed in a common support frame.

The gas valve unit is an aggregate comprising the enclosure, which is configured to be gas tight when assembled for use. Gas valve unit is advantageously configured for use in a gaseous fuel feeding system of a land based or marine power plant. The enclosure forms a safety barrier for containing, and con-trollably handling any leakage of gas from gas delivery equipment in the enclosure.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates a gas valve unit according to an embodiment of the invention,
Figure 2 illustrates a side cross sectional view of the gas valve unit according to another embodiment of the invention,
Figure 3 illustrates a back view of the gas valve unit according to an embodiment of the invention,
Figure 4 illustrates a front view of the base plate of the gas valve unit according to an embodiment of the invention,
Figure 5 illustrates a partial cut-out of the base plate of the gas valve unit according to an embodiment of the invention,
Figure 6 illustrates a filter unit of the gas valve unit according to an embodiment of the invention,
Figure 7 illustrates a filter unit of the gas valve unit according to an embodiment of the invention,
Figure 8 illustrates a filter unit of the gas valve unit according to an embodiment of the invention,
Figure 9 illustrates a filter unit of the gas valve unit according to an embodiment of the invention,
Figure 10 illustrates a filter unit of the gas valve unit according to an embodiment of the invention, and
Figure 11 illustrates a gas valve unit according to another embodiment of the invention.

### Detailed Description of Drawings

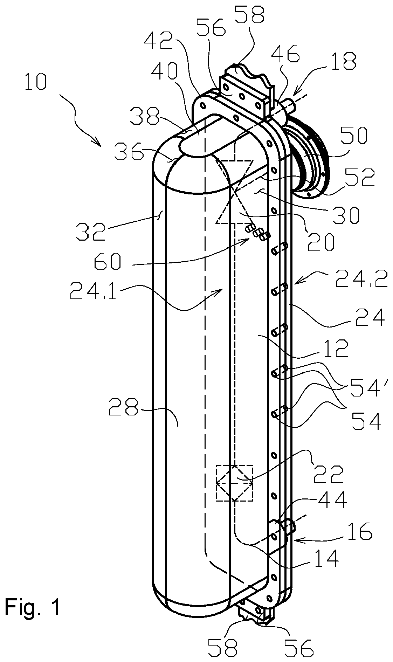

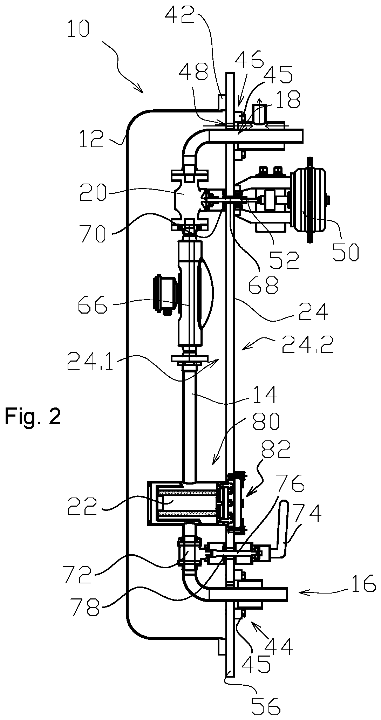

Figure 1 depicts schematically a gas valve unit 10 according to an embodiment of the invention. The gas valve unit 10 is an aggregate comprising an enclosure 12, which is configured to be gas tight when assembled for use, and desired gas handling and delivery equipment. The main functions of the Gas Valve Unit are to regulate the gas feeding pressure to the engine, and to ensure a fast and reliable shut down of the gas supply. Gas valve unit is configured to enclose gas delivery equipment belonging to a gas feeding pipe system. The gas valve unit 10 comprises a gas pipe 14, which runs in the enclosure between an inlet 16 and an outlet 18 of the gas pipe. The gas valve unit 10 comprises a control valve 20 in the gas pipe 14. In the figure 1 the gas pipe 14 is shown only very schematically mainly for illustration purposes of the enclosure 12. Figure 1 also depicts how the gas pipe 14 may be provided with a filter unit between the inlet 16 and the control valve 20. Figures 2 - 4 disclose a gas valve unit 10 in more detailed manner.

As it becomes clear from the figure 1 the enclosure 12 comprises a base plate 24 and a casing 28. The base plate 24 has a first side 24.1 and a second side 24.2. The base plate is advantageous planar, which makes the attachment and also disposition of the equipment of to the gas valve unit easy and straightforward. The casing 28 is arranged at the first side 24.1 of the base plate 24. The casing is provided with two parallel and planar side walls 30, the first and the second side wall, only one of which is shown in the figure 1, and an arched third wall 32 which form a bottom part of the casing 28, which may also be referred to by numeral 32. The arched third wall is parallel to the planar side walls 30 and connects a first edge of the first side wall and a first edge of the second side wall and it has a radius of curvature. The casing, particular its bottom part, has end parts 34 comprising a dome quadrant 36 and a fourth ached wall 38 with partial planar end wall 40. The partial planar end wall 40 is perpendicular to the first and the second side walls 30. The casing 28 is attached to the base plate at the rim of the side walls. This is advantageously accomplished such that the casing 28 further comprises a flange part 42 which encircles the rim of the casing 28, the rim being formed by the edge of two parallel and planar side walls 30, the ached wall 38 and the partial planar end wall 40. The flange part 42 perpendicular to the walls forming the rim it is attached to. The flange part is assembled and attached against the base plate 24 such as forming a confined and gas tight space inside the casing delimited by the inner wall of the casing itself and the first side 24.1 of the base plate 24. There may also be other ways of attaching the casing to the base plate. In the gas valve unit 10 the gas pipe 14 and the control valve 20 are supported by the base plate 24 at the first side of the base plate, so that the casing 28 is removable from the gas valve unit 10 only by detaching the flange part 42 from the base plate 24. In other words in the gas valve unit the casing 28 is free from any attachment to the gas flow equipment (such as the gas pipe, control valve, blocking valves, filter or corresponding devices) participating directly to gas flow. Further the base plate 24 comprises an inlet lead-through 44 for the gas pipe inlet 16, and an outlet lead-through 46 for the gas pipe outlet 18. This way also the gas pipe is led into and out from the gas valve unit through the base plate 24. The inlet lead-through 44 is arranged to a first end of the gas valve unit 10 and the outlet lead-through 46 is arranged at the second end of the gas valve unit 10, opposite to the first end. The casing may be provided with suitable stiffening elements which are not shown here for clarity reasons.

In the gas valve unit 10 the gas flow control valve 20 part is installed inside the pressure proof enclosure. More particularly only the valve body is inside the enclosure. As is shown in the figures 1 and 2 the valve 20 is provided with an actuator 50 for setting the valve to a desired position in order to obtain desired gas flow rate, and also for closing or opening the control valve 50. The actuator 50 is coupled to the control valve 20 by means of a mechanical force transmission system 52. The control valve 20 is arranged to a first side 24.1 of the base plate 24, inside the casing, and the actuator 50 is arranged to a second side 24.2 of the base plate 24, while the mechanical force transmission system 52 is configured to extend through the base plate by means of a lead-through provided with a gas tight sealing (not shown in the figure 1). In the flange part 42 of the casing 28 there is an array of screw holes 54. Also the base plate 24 is provided with a corresponding array of screw holes 54' at its edge region, such that the holes 51 in flange part 42 align with each other for assembly of bolts or alike making possible the attachment of the flange part to the base plate.

In order to support the gas valve unit 10 to a desired structure 58 the base plate 24 is provided with at least one planar extension 56 in the plane of the base plate, outside the flange part 42 of the casing 28. The extension is configured as an attachment bracket of the gas valve unit 10. The gas valve unit 24 has a first end and a second end and advantageously there are two extensions 56 arranged to the base plate 24, each one of which is arranged to a longitudinal end of the base plate of the gas valve unit 10. The planar extensions extend outside from the outer periphery of flange part 42 of the casing 28 at both ends of the gas valve unit being configured as an attachment bracket of the gas valve unit 10.

The gas valve unit 10 is substantially of elongated form and it has a length and a width, and the ratio of the length to the width is at least 2. Accordingly the base plate 24 has a length and a width and the ratio of the length to the width of the base plate is at least 2.

In addition to the mechanical transmission system 52 of the control valve 20 there are, in practise, also other items in the gas valve unit 10 that needs a gas tight and pressure proof lead-through. As is shown in the figure with the numeral 60 such lead-through openings in the gas valve unit 10, such as lead-through for hoses, electric or data cables and mechanical force transmissions, are arranged to the base plate 24.

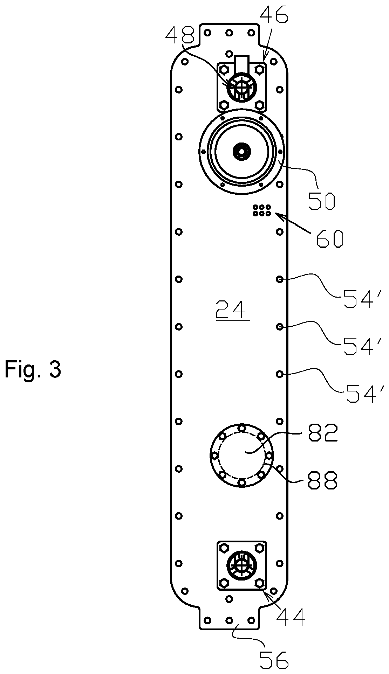

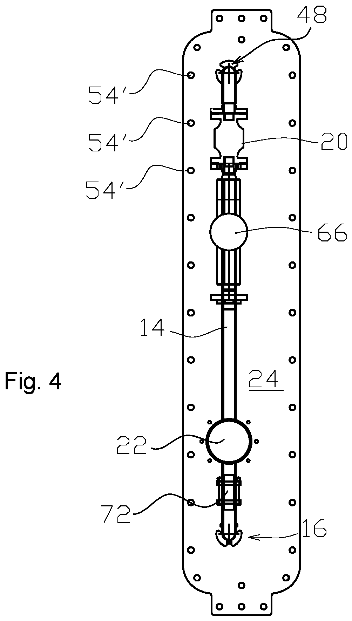

Now turning to the Figures 2, 3 and 4 the gas valve unit 10 according to an embodiment of the invention is explained in more detailed manner. Figure 2 shows a side cross sectional view of the gas valve unit 10 according to an embodiment of the invention. Figure 3 shows back view of the gas valve unit 10 according to an embodiment of the invention. Figure 4 shows a front view of the base plate of the gas valve unit 10 with the casing 28 removed from the base plate 24 according to an embodiment of the invention.

The base plate 24 is planar and substantially thick to meet the required demands of the pressure endurance of the gas valve unit 40, even if the planar form in not technically optimal solely in respect of withholding pressure. However, due to the robust planar structure, the base plate 24 can reliably be used for supporting the gas valve unit 40 to desired support structure using an integrated bracket structure 56 of the base plate 24. The array of screw holes 54' at the edge region of the base plate 24 defines an attachment or a flange area around the base plate 24 and further the brackets are formed by the planar extensions 56 of the base plate outside the flange area.

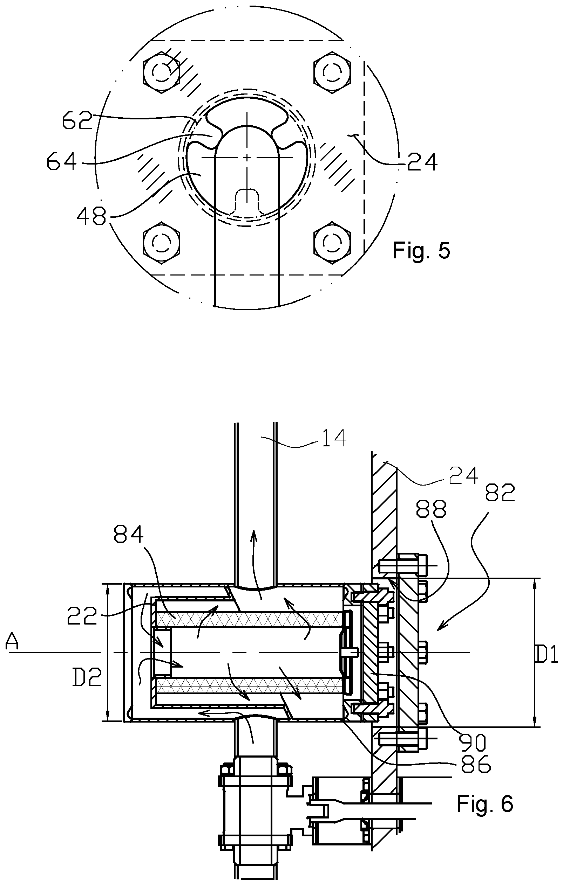

The inlet lead-through 44 for the gas pipe inlet 16 and the outlet lead-through 46 for the gas pipe outlet 18 comprise an opening 48 in the base plate 24. Figure 5 which is a partial cut-out of the base plate 24 seen from the first side 24.1 of the base plate, illustrates the opening 48 in more detailed manner. The opening 48 has an area greater than cross sectional area of the gas pipe 14 such that the gas pipe can extend through the base plate 24 via the opening 48 and a flow passage is formed around the gas pipe 14. The opening comprises a base circle 62 which equals to a largest diameter of the opening 48. There are arranged at least three radial extensions 64 of the base plate, and in the plane of the base plate 24, towards the center of the opening 48 which are arranged to support radially the gas pipe 14 in the lead-through. The radial extensions are circumferentially equally space along the opening 48 and they extend from the base circle to the outer wall of the gas pipe 14. Gas pipe 14 is radially supported by the extension such that axial movement of the gas pipe 14 is allowed in the opening 48. As is seen in the figure 5, and the inlet lead-through for the gas pipe inlet, and the outlet lead-through for the gas pipe outlet are provided with a barrier pipe coupling 45, such as a flange joint, arranged to the base plate 24 at its second side, such that the area of the opening in the base plate is covered by the barrier pipe coupling 45.

Now referring back to the figures 2 - 4 the inlet lead-through 44 for the gas pipe inlet and the outlet lead-through 46 for the gas pipe outlet are arranged perpendicularly to the base plate at the end portions of the base plate 44. The gas pipe extends from the inlet lead-through 44 to the outlet lead-through 46 at the first side 24.1 of the base plate 24, inside the enclosure 12. As is mentioned above the gas valve unit 10 is further provided with control valve 20. Additionally the gas valve unit is provided with a gas flow rate meter 66 and the filter unit 22 between the inlet 16 and the control valve 20, as is also shown in the figure 1. As is shown also in the figures 2 - 4 the valve 20 is provided with an actuator 50 for setting the valve to a desired position in order to obtain desired gas flow rate. The actuator 50 is coupled to the control valve 20 by means of a mechanical force transmission system 52. The mechanical force transmission system comprises a force transmission rod 53. Depending on the type of the control valve the force transmission rod 68 can by a torsion rod or push-pull rod. As it becomes apparent from the figure 2 the control valve 20 is arranged to a first side 24.1 of the base plate 24, inside the casing, and the actuator 50 is arranged to a second side 24.2 of the base plate 24, while the force transmission rod is configured to extend through the base plate 24 by means of a lead-through provided with a gas tight sealing 70. This way the actuator of the valve, which typically requires more service attention than the valve itself, is easily accessible. Additionally the instrumentation (electric wires, pneumatic hoses) of the actuator is safe because their interfaces is outside the enclosure.

The gas valve unit is also provided with a manual closing valve 72 arranged next to the inlet 16 of the gas pipe 14 in the gas flow direction. The closing valve 72 is arranged in the first side of the base plate 24, inside the enclosure 12. The closing valve 72 comprises a manual actuator 74, a lever, arranged to the second side 24.2 of the base plate 24, outside the enclosure 12. The closing valve is also provided with a torsion rod 76 configured to extend through the base plate 24 by means of a lead-through provided with a gas tight sealing 78.

Generally it can be said that that each one of the valves 20,72 in the gas pipe 14 is arranged to the gas valve unit such that the valve is in the first side of the base plate and the actuator 50,74 of the valve is in the second side of the base plate 24, and the force transmission, such as the force transmission rod 46,76, is provided between the actuator and the valve to extend through the base plate in gas tight manner. The sealing which provides the gas tight manner may be realized for example by using one or more lip seals.

The gas valve unit comprises a filter unit 22 arranged to the gas pipe 14 at the first side 24.1 of the base plate 24. The base plate 24 is provided with an access door 82 at a location of the filter unit accessible at the second side of the base plate 24. By means of the access door 82 it is possible to access to the filter unit for example for servicing the filter unit 22. The access door is removably assembled to the base plate 24 in pressure proof manner.

Figure 6 discloses the filter unit 22 of the figure 2 in more detailed manner. The filter unit 22 is of generally cylindrical form having a diameter D2 and longitudinal axes A. The access door 82 comprises a circular opening 88 in the base plate 24 having a diameter D1. According to an embodiment of the invention the diameter D2 of the circular opening 88 is greater than the diameter of the filter unit 22. This way, when the access door is open it is possible to gain access to the filter unit 22 for servicing. The filter unit 22 comprises a replaceable cartridge 84 which is configured to be replaceable via the access door 82.

The filter unit 22 has a first axial end which is facing the base plate 24 when installed. The first axial end of the filter unit 22 is provided with a hatch 90 which is removably attached in a gas tight manner to a body 86 of the filter unit 22. The cartridge 84 is also cylindrical and attached by its ends to the body 86 of the filter unit 22 in a gas tight manner. The filter body 86 is divided into inlet side and outlet side such that the inlet side is in flow communication with inside of the filter cartridge and the outlet side is in flow communication with outside of the filter cartridge. One end of the cylindrical cartridge is in flow communication with the inlet side and the other end of the cartridge is blocked, so that gas flows in the cartridge via its end and through the filter to the outlet side of the filter body 86. General gas flow direction in the filter unit 22 is shown by arrows in the figure.

The hatch 90 in the first end of the filter unit 22 is facing against the base plate 24 and the 90 is configure to fit into, and out through the opening 88 of the access door 82 in the base plate 24.Advantageously the hatch 90 is circular and it has a diameter equal to the diameter D2 of the filter unit 22.

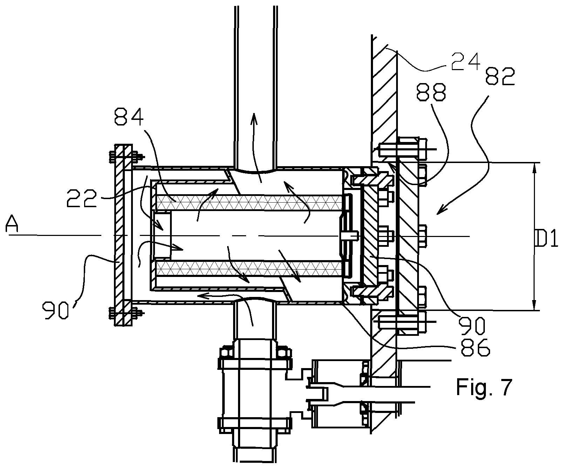

Figure 7 shows a filter unit 22 according to another embodiment of the invention. The filter unit 22 is otherwise similar to that shown in the figure 6 but according to the embodiments of the figure 7 the filter unit comprises a second hatch 90' for accessing the cartridge at a second end of the filter unit, opposite to the first end.

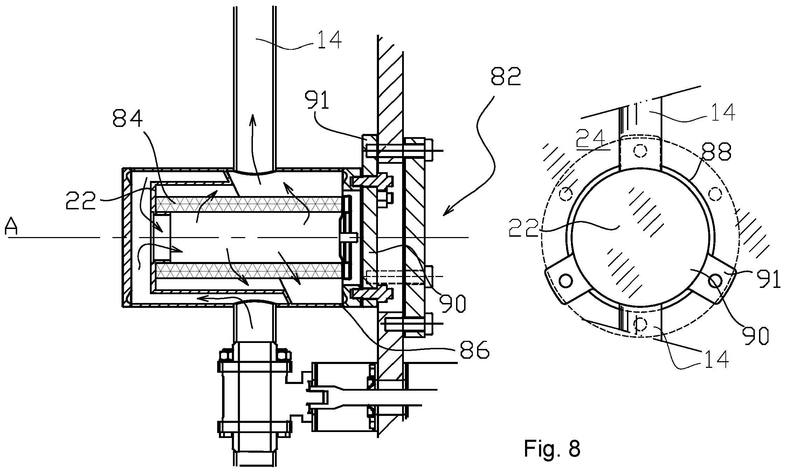

Depending on the practical application it may be necessary to support the filter unit 22, in addition to being supported by the gas pipe 14, to the base plate 24. In the figure 8 the filter unit is attached to the base plate by means of the hatch 90 of the filter unit 22. The hatch is provided with a number of lugs 91 extending radially from the edge of the hatch 90. The lugs are provided with an opening having internal thread and the lugs 91 are attached against to the first side of the base plate by means of attachment screws of the access door 82. Generally the hatch 90 has its diameter D2 smaller than the diameter D1 of the opening 80 in the base plate 24 and only the lugs extend onto the base plate 24. This way it can be ensured that the space between the hatch 90 and the access door 82 is properly ventilated.

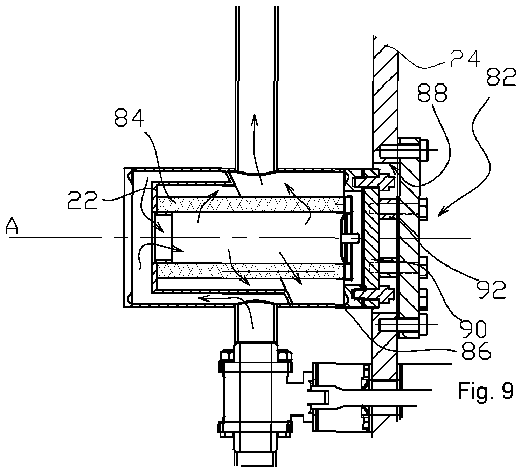

Figure 9 discloses an alternative manner of supporting the filter unit 22 in the gas valve unit. As it becomes clear from the figure 9 the filter unit 22 is attached to the access door 82 by means of one or more (two shown in the figure) bolts attached to the hatch 90 of the filter unit 22 such that the hatch 90 is space from the access door 82. The hatch 90 is provided with a blind opening having internal thread and the access door is provided with a coaxial through hole. A bolt extends through the hole in the access door to the thread in the hatch 90 and there is spacer bushing 92 arranged between the access door 82 and the hatch 90. Like in the embodiment of the figure 8 this way it can be ensured that the space between the hatch 90 and the access door 82 is properly ventilated.

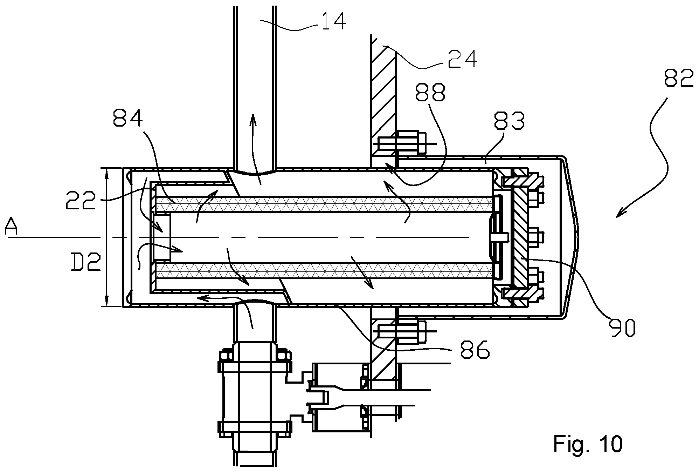

Figure 10 discloses an alternative embodiment of the filter unit in which the access door 82 comprises an axial extended enclosure 83 extending perpendicularly from the plane of the base plate 24 to the second side thereof. The extension enclosure 83 is a cylindrical housing. The filter unit 22 is also arranged to extend through the opening 88 into the enclosure 83.

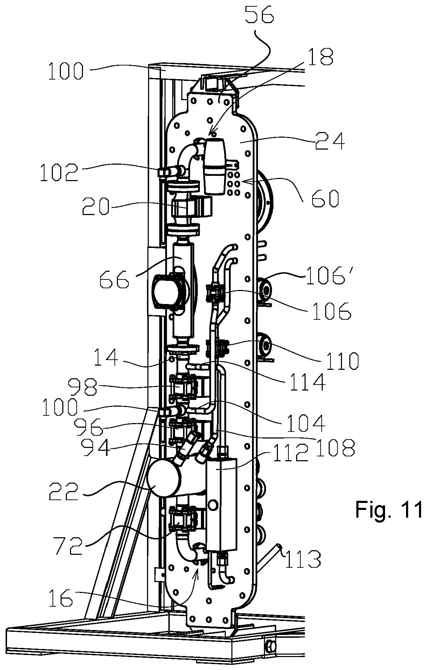

Figure 11 shown a gas valve unit 10 attached to a support frame 100 by the extensions 56 of the base plate 24. In the figure 11 the gas valve unit comprises more complete set of gas handling deliver equipment. The gas pipe 14 runs in the enclosure between an inlet 16 and an outlet 18 of the gas pipe. Between the inlet and outlet the gas pipe comprises firstly the manual closing valve 72 and the filter unit 22 downstream the manual closing valve 72. The filter unit 22 is provided with a pressure sensor 94. Downstream the filter unit 22 there is a first block valve 96 and a second block valve 98. Two block valves provide full redundancy as they are installed in series. Between the block valves 96, 98 there is a pressure sensor 100 in the gas pipe 14. The gas flow rate meter 66 is arranged after the second block valve 98 in the gas pipe 14 and the control valve 20 downstream the gas flow rate meter 66. Upstream the outlet 18 and downstream the control valve 98 there is a pressure sensor 102.

The gas valve unit 10 comprises further a first bleed channel 104 connected between the block valves 96, 98 and there is a first bleed valve 106 arranged to the first bleed channel. The gas valve unit 10 comprises further a second bleed channel 108 connected between the filter, here shown physically connected to the filter unit 22, and the first block valve 96 and there is a second bleed valve 110 arranged to the second bleed channel 108. Generally, the bleed valve is arranged inside the gas valve unit 10 and its actuator outside the gas valve unit. The actuator is coupled to the bleed valve 106 by means of a mechanical force transmission system. More precisely, referring the first bleed valve only, the bleed valve 106 is arranged to a first side 24.1 of the base plate 24, inside the casing, and its actuator 106' is arranged to a second side 24.2 of the base plate 24, while the mechanical force transmission system (not shown) is configured to extend through the base plate by means of a lead-through provided with a gas tight sealing.

The gas valve unit 10 further comprise a connection for inerting the fuel gas pipe with e.g. nitrogen. There is a valve block 112 which is connected to a source of nitrogen 113, or other inert gas. The valve block 112 is connect by means of a channel 114 to the gas pipe 14 at the location between the block valves 96, 98. Here the block is inside the gas valve unit 10, but that is not essential to the invention but the block 112 may also be located outside the gas valve unit 10. In such a case the valve block 112 may be position to the second side 24.2 of the base plate and the channel 114 is arranged to extend from the gas pipe 14, through the base plate 24 to the valve block. The valve block comprise two closing valves in series and a bleed valve between the closing valves (not shown here).

## Claims

1. A gas valve unit (10) comprising at least a gas pipe (14) for transporting gas through the gas valve unit (10), a control valve (20) arranged to the gas pipe (14), an enclosure (12) for enclosing the gas pipe (14) and the control valve (20), and having an inlet (16) and an outlet (18) of the gas pipe (14), wherein the enclosure (12) comprises a planar base plate (24) having a first side (24.1) and a second side (24.2), and a casing (28), which comprises side walls (30) and a bottom part (32), which casing is arranged at the first side (24.1) of the planar base plate (24), and removably attached to the planar base plate (24) by the side walls, **characterized in that** the gas pipe (14) and the control valve (20) are supported by the planar base plate (24) at the first side (24.1) of the planar base plate (24), and that the planar base plate (24) comprises an inlet lead-through (44) for the inlet (16) of the gas pipe (14), and an outlet lead-through (46) for the outlet (18) of the gas pipe (14).

2. A gas valve unit (10) according to the embodiment claim 1, **characterized in that** the casing (28) comprises a flange part (42) which encircles a casing rim, and which flange part (42) is arranged against the planar base plate (24) such as forming a space in the casing (28) delimited by the inner wall of the casing (28) and the planar base plate (24).

3. A gas valve unit (10) according to the claim 1, **characterized in that** the control valve (20) is provided with an actuator (50) for closing or opening the control valve (20) and that the actuator (50) is coupled to the control valve (20) by means of a mechanical force transmission system (52), wherein the control valve (20) is arranged to a first side (24.1) of the planar base plate (24), inside the casing (28), and the actuator (50) is arranged to a second side (24.2) of the planar base plate (24), and the mechanical force transmission system (52) is configured to extend through the planar base plate (24) by means of a lead-through provided with a gas tight sealing (70).

4. A gas valve unit (10) according to the claim 1 or 2, **characterized in that** the base plate (24) is provided with at least one planar extension (56) outside the flange part (42) of the casing (28) configured as an attachment bracket of the gas valve unit (10).

5. A gas valve unit (10) according to the claim 1 or 2, **characterized in that** the inlet lead-through (44) for the gas pipe (14) inlet, and the outlet lead-through (46) for the gas pipe (14) outlet comprise an opening (48) in the planar base plate (24) which opening has an area greater than cross sectional area of the gas pipe (14), and the inlet lead-through (44) for the gas pipe (14) inlet, and the outlet lead-through (46) for the gas pipe (14) outlet are provided with a barrier pipe coupling (45) arranged to the planar base plate (24) at its second side (24.2), such that the area of the opening in the planar base plate (24) is covered by the barrier pipe coupling (45).

6. A gas valve unit (10) according to the claim 1 or 4, **characterized in that** the inlet lead-through (44) for the gas pipe (14) inlet, and the outlet lead-through (46) for the gas pipe (14) outlet are arranged perpendicularly to the planar base plate (24).

7. A gas valve unit (10) according to the claim 1 or 5, **characterized in that** the gas valve unit (10) has a first end and a second end and the inlet lead-through (44) is arranged to the first end of the gas valve unit (10) and the outlet lead-through (46) is arranged at the second end of the gas valve unit (10).

8. A gas valve unit (10) according to anyone of the preceding claims, **characterized in that** the gas valve unit (10) comprises a filter unit (22) arranged to the gas pipe (14) at the first side (24.1) of the planar base plate (24), and the planar base plate (24) is provided with an access door (82) at a location of the filter unit (22).

9. A gas valve unit (10) according to the claim 8, **characterized in that** the filter unit (22) comprises a first hatch (90) facing against the planar base plate (24) and the access door (82) comprises an opening in the planar base plate (24) through which the hatch (90) is configured to fit.

10. A gas valve unit (10) according to the claim 3, **characterized in that** the planar base plate (24) is provided with two planar extensions (56) outside the flange part (42) of the casing (28) at both ends of the planar base plate (24) of the gas valve unit (10) configured as an attachment bracket of the gas valve unit (10).

11. A gas valve unit (10) according to claim 1, **characterized in that** lead-through openings (60) in the gas valve unit (10), such as lead-through for hoses, electric or data cables and mechanical force transmissions, are arranged to the planar base plate (24).

12. A gas valve unit (10) according to anyone of the preceding claims 1 or 2, **characterized in that** the gas pipe comprises a manual closing valve (72) arranged next to the inlet (16) of the gas pipe (14) and each one of the valves in the gas pipe (14) is arranged to the gas valve unit (10) such that the valve is in the first side (24.1) of the planar base plate (24) and the actuator (50) of the valve is in the second side (24.2) of the planar base plate (24) and a force transmission rod (68) is provided between the actuator (50) and the valve to extend through the planar base plate (24) in gas tight manner.

## Patentansprüche

1. Gasventileinheit (10), die mindestens ein Gasrohr (14) zum Befördern von Gas durch die Gasventileinheit (10), ein Steuerventil (20), das an dem Gasrohr (14) angeordnet ist, eine Hülle (12) zum Umhüllen des Gasrohres (14) und des Steuerventils (20), und die einen Einlass (16) und einen Auslass (18) des Gasrohres (14) aufweist, wobei die Hülle (12) eine ebene Grundplatte (24) umfasst, die eine erste Seite (24.1) und eine zweite Seite (24.2) aufweist, und ein Gehäuse (28), das Seitenwände (30) und einen unteren Teil (32) umfasst, wobei das Gehäuse an der ersten Seite (24.1) der ebenen Grundplatte (24) angeordnet und durch die Seitenwände abnehmbar an der ebenen Grundplatte (24) befestigt ist, umfasst, **dadurch gekennzeichnet, dass** das Gasrohr (14) und das Steuerventil (20) durch die ebene Grundplatte (24) an der ersten Seite (24.1) der ebenen Grundplatte (24) getragen werden und dass die ebene Grundplatte (24) eine Einlass-Durchführung (44) für den Einlass (16) des Gasrohres (14) und eine Auslass-Durchführung (46) für den Auslass (18) des Gasrohres (14) umfasst.

2. Gasventileinheit (10) nach Anspruch 1, **dadurch gekennzeichnet, dass** das Gehäuse (28) einen Flanschteil (42) umfasst, der einen Gehäuserand umgibt, und wobei der Flanschteil (42) derart an der ebenen Grundplatte (24) angeordnet ist, dass er einen Raum in dem Gehäuse (28) bildet, der durch die innere Wand des Gehäuses (28) und die ebene Grundplatte (24) begrenzt wird.

3. Gasventileinheit (10) nach Anspruch 1, **dadurch gekennzeichnet, dass** das Steuerventil (20) mit einem Stellantrieb (50) zum Schließen oder Öffnen des Steuerventils (20) versehen ist und dass der Stellantrieb (50) mit Hilfe eines mechanischen Kraftübertragungssystems (52) an das Steuerventil (20) gekoppelt ist, wobei das Steuerventil (20) an einer ersten Seite (24.1) der ebenen Grundplatte (24), innerhalb des Gehäuses (28), angeordnet ist und der Stellantrieb (50) an einer zweiten Seite (24.2) der ebenen Grundplatte (24) angeordnet ist und das mechanische Kraftübertragungssystem (52) dafür konfiguriert ist, sich mit Hilfe einer Durchführung, die mit einer gasdichten Abdichtung (70) versehen ist, durch die ebene Grundplatte (24) zu erstrecken.

4. Gasventileinheit (10) nach Anspruch 1 oder 2, **dadurch gekennzeichnet, dass** die Grundplatte (24) mit mindestens einer ebenen Verlängerung (56) außerhalb des Flanschteils (42) des Gehäuses (28) versehen ist, die als eine Befestigungshalterung der Gasventileinheit (10) konfiguriert ist.

5. Gasventileinheit (10) nach Anspruch 1 oder 2, **dadurch gekennzeichnet, dass** die Einlass-Durchführung (44) für den Einlass des Gasrohres (14) und die Auslass-Durchführung (46) für den Auslass des Gasrohres (14) eine Öffnung (48) in der ebenen Grundplatte (24) umfassen, wobei die Öffnung eine Fläche, größer als die Querschnittsfläche des Gasrohres (14), aufweist und die Einlass-Durchführung (44) für den Einlass des Gasrohres (14) und die Auslass-Durchführung (46) für den Auslass des Gasrohres (14) mit einer Absperr-Rohrkupplung (45) versehen sind, die an der ebenen Grundplatte (24) an ihrer zweiten Seite (24.2) derart angeordnet ist, dass die Fläche der Öffnung in der ebenen Grundplatte (24) durch die Absperr-Rohrkupplung (45) abgedeckt wird.

6. Gasventileinheit (10) nach Anspruch 1 oder 4, **dadurch gekennzeichnet, dass** die Einlass-Durchführung (44) für den Einlass des Gasrohres (14) und die Auslass-Durchführung (46) für den Auslass des Gasrohres (14) senkrecht zu der ebenen Grundplatte (24) angeordnet sind.

7. Gasventileinheit (10) nach Anspruch 1 oder 5, **dadurch gekennzeichnet, dass** die Gasventileinheit (10) ein erstes Ende und ein zweites Ende aufweist und die Einlass-Durchführung (44) an dem ersten Ende der Gasventileinheit (10) angeordnet ist und die Auslass-Durchführung (46) an dem zweiten Ende der Gasventileinheit (10) angeordnet ist.

8. Gasventileinheit (10) nach einem der vorhergehenden Ansprüche, **dadurch gekennzeichnet, dass** die Gasventileinheit (10) eine Filtereinheit (22) umfasst, die an dem Gasrohr (14) an der ersten Seite (24.1) der ebenen Grundplatte (24) angeordnet ist, und die ebene Grundplatte (24) mit einer Zugangstür (82) an einer Position der Filtereinheit (22) versehen ist.

9. Gasventileinheit (10) nach Anspruch 8, **dadurch gekennzeichnet, dass** die Filtereinheit (22) eine erste Klappe (90) umfasst, die zu der ebenen Grundplatte (24) zeigt, und die Zugangstür (82) eine Öffnung in der ebenen Grundplatte (24) umfasst, durch die zu passen die Klappe (90) konfiguriert ist.

10. Gasventileinheit (10) nach Anspruch 3, **dadurch gekennzeichnet, dass** die ebene Grundplatte (24) mit zwei ebenen Verlängerungen (56) außerhalb des Flanschteils (42) des Gehäuses (28) an beiden Enden der ebenen Grundplatte (24) der Gasventileinheit (10) versehen ist, die als eine Befestigungshalterung der Gasventileinheit (10) konfiguriert sind.

11. Gasventileinheit (10) nach Anspruch 1, **dadurch gekennzeichnet, dass** Durchführungsöffnungen (60) in der Gasventileinheit (10), wie beispielsweise eine Durchführung für Schläuche, elektrische oder Datenkabel und mechanische Kraftübertragungen, an der ebenen Grundplatte (24) angeordnet sind.

12. Gasventileinheit (10) nach einem der vorhergehenden Ansprüche 1 oder 2, **dadurch gekennzeichnet, dass** das Gasrohr ein manuelles Verschlussventil (72) umfasst, das neben dem Einlass (16) des Gasrohres (14) angeordnet ist, und jedes der Ventile in dem Gasrohr (14) derart an der Gasventileinheit (10) angeordnet ist, dass sich das Ventil in der ersten Seite (24.1) der ebenen Grundplatte (24) befindet und sich der Stellantrieb (50) des Ventils in der zweiten Seite (24.2) der ebenen Grundplatte (24) befindet und eine Kraftübertragungsstange (68) zwischen dem Stellantrieb (50) und dem Ventil bereitgestellt wird, um sich auf eine gasdichte Weise durch die ebene Grundplatte (24) zu erstrecken.

## Revendications

1. Unité de vanne à gaz (10) comprenant au moins un tuyau à gaz (14) pour transporter du gaz à travers l'unité de vanne à gaz (10), une vanne de commande (20) disposée sur le tuyau à gaz (14), une enceinte (12) pour renfermer le tuyau à gaz (14) et la vanne de commande (20), et comportant une entrée (16) et une sortie (18) du tuyau à gaz (14), l'enceinte (12) comprenant une plaque de base planaire (24) dotée d'une première face (24.1) et d'une seconde face (24.2), et d'un compartiment (28) qui comprend des parois latérales (30) et une partie inférieure (32), lequel compartiment est disposé sur la première face (24.1) de la plaque de base planaire (24) et fixé de manière amovible à la plaque de base planaire (24) par les parois latérales, **caractérisé en ce que** le tuyau à gaz (14) et la vanne de commande (20) sont supportés par la plaque de base planaire (24) sur la première face (24.1) de la plaque de base planaire (24), et que la plaque de base planaire (24) comprend un passage d'entrée (44) pour l'entrée (16) du tuyau à gaz (14), et un passage de sortie (46) pour la sortie (18) du tuyau à gaz (14).

2. Unité de vanne à gaz (10) selon la forme de réalisation de la revendication 1, **caractérisée en ce que** le compartiment (28) comprend un élément bride (42) qui encercle un rebord du compartiment, et lequel élément bride (42) est disposé contre la plaque de base planaire (24) de manière à former dans le compartiment (28) un espace délimité par la paroi intérieure du compartiment (28) et la plaque de base planaire (24).

3. Unité de vanne à gaz (10) selon la revendication 1, **caractérisée en ce que** la vanne de commande (20) est pourvue d'un actionneur (50) pour fermer ou ouvrir la vanne de commande (20) et que l'actionneur (50) est couplé à la vanne de commande (20) au moyen d'un système de transmission de force mécanique (52), la vanne de commande (20) étant disposée sur une première face (24.1) de la plaque de base planaire (24), à l'intérieur du compartiment (28), et l'actionneur (50) étant disposé sur une seconde face (24.2) de la plaque de base planaire (24), et le système de transmission de force mécanique (52) étant configuré pour s'étendre à travers la plaque de base planaire (24) au moyen d'un passage pourvu d'un joint étanche au gaz (70).

4. Unité de vanne à gaz (10) selon la revendication 1 ou 2, **caractérisée en ce que** la plaque de base (24) est pourvue d'au moins une extension planaire (56) à l'extérieur de l'élément bride (42) du compartiment (28) qui est configurée sous forme d'un support de fixation de l'unité de vanne à gaz (10).

5. Unité de vanne à gaz (10) selon la revendication 1 ou 2, **caractérisée en ce que** le passage d'entrée (44) pour l'entrée de tuyau à gaz (14), et le passage de sortie (46) pour la sortie de tuyau à gaz (14) comprennent une ouverture (48) dans la plaque de base planaire (24), laquelle ouverture a une superficie supérieure à la superficie de section transversale du tuyau à gaz (14), et que le passage d'entrée (44) pour l'entrée de tuyau à gaz (14), et le passage de sortie (46) pour la sortie de tuyau à gaz (14) sont pourvus d'un accouplement de tuyau formant barrière (45) disposé sur la plaque de base planaire (24) au niveau de sa seconde face (24.2), de sorte que la superficie de l'ouverture de la plaque de base planaire (24) est couverte par l'accouplement de tuyau formant barrière (45).

6. Unité de vanne à gaz (10) selon la revendication 1 ou 4, **caractérisée en ce que** le passage d'entrée (44) pour l'entrée de tuyau à gaz (14), et le passage de sortie (46) pour la sortie de tuyau à gaz (14) sont disposés perpendiculairement à la plaque de base planaire (24).

7. Unité de vanne à gaz (10) selon la revendication 1 ou 5, **caractérisée en ce que** l'unité de vanne à gaz (10) a une première extrémité et une seconde extrémité et que le passage d'entrée (44) est disposé à la première extrémité de l'unité de vanne à gaz (10) et que le passage de sortie (46) est disposé à la seconde extrémité de l'unité de vanne à gaz (10).

8. Unité de vanne à gaz (10) selon l'une quelconque des revendications précédentes, **caractérisée en ce que** l'unité de vanne à gaz (10) comprend une unité de filtre (22) disposée sur le tuyau à gaz (14) sur la première face (24.1) de la plaque de base planaire (24), et que la plaque de base planaire (24) est pourvue d'une porte d'accès (82) à un emplacement de l'unité de filtre (22) .

9. Unité de vanne à gaz (10) selon la revendication 8, **caractérisée en ce que** l'unité de filtre (22) comprend une première trappe (90) tournée contre la plaque de base planaire (24) et que la porte d'accès (82) comprend une ouverture dans la plaque de base planaire (24) à travers laquelle la trappe (90) est configurée pour s'ajuster.

10. Unité de vanne à gaz (10) selon la revendication 3, **caractérisée en ce que** la plaque de base planaire (24) est pourvue de deux extensions planaires (56) à l'extérieur de l'élément bride (42) du compartiment (28) aux deux extrémités de la plaque de base planaire (24) de l'unité de vanne à gaz (10) configurées sous forme d'un support de fixation de l'unité de vanne à gaz (10).

11. Unité de vanne à gaz (10) selon la revendication 1, **caractérisée en ce que** des ouvertures de passage (60) dans l'unité de vanne à gaz (10), comme un passage pour des flexibles, des câbles électriques ou de transmission de données et des câbles de transmission de force mécanique, sont disposés dans la plaque de base planaire (24).

12. Unité de vanne à gaz (10) selon l'une quelconque des revendications précédentes 1 ou 2, **caractérisée en ce que** le tuyau à gaz comprend une vanne à fermeture manuelle (72) disposée près de l'entrée (16) du tuyau à gaz (14) et que chacune des vannes dans le tuyau à gaz (14) est disposée sur l'unité de vanne à gaz (10), de sorte que la vanne est dans la première face (24.1) de la plaque de base planaire (24) et que l'actionneur (50) de la vanne est dans la seconde face (24.2) de la plaque de base planaire (24) et qu'une barre de transmission de force (68) est prévue entre l'actionneur (50) et la vanne de manière à s'étendre à travers la plaque de base planaire (24) de manière étanche au gaz.
